# EUROPÄISCHE PATENTSCHRIFT

(11) **EP 0 679 771 B1**
(45) Veröffentlichungstag und Bekanntmachung des Hinweises auf die Patenterteilung: **20.10.2004**
(21) Anmeldenummer: 95106051.6
(22) Anmeldetag: 22.04.1995
(51) Int. Cl.: E03D 5/012, E03D 5/00

(54) **Vorrichtung zum Be- und Entlüften von Fäkalienbehältern**
Venting device for faeces receptacle
Dispositif de ventilation pour receptacle de fèces

(30) Priorität: 27.04.1994 DE 9406984 U
(43) Veröffentlichungstag der Anmeldung: 02.11.1995
(60) Teilanmeldung: 04003893.7
(73) Patentinhaber: Dahmann, Werner, 56332 Löf (DE)
(72) Erfinder: Dahmann, Werner, 56332 Löf (DE)
(74) Vertreter: Richardt, Markus, Dipl.-Ing.

(56) Entgegenhaltungen:
- EP-A- 0 552 411
- DE-A- 2 154 652
- US-A- 4 044 406
- US-A- 4 748 698

## Beschreibung

Die Erfindung betrifft einen Fäkalienbehälter mit einer Vorrichtung, zum Be- und Entlüften desseltigen gemäß dem Oberbegriff des Schutzanspruchs 1.

Der Erfindung zugrunde liegen die Erkenntnisse aus dem Stand der Technik, daß der Zersetzungsprozess von Fäkalien und Toilettenpapier in Fäkalienbehältern, durch die vermehrte Zufuhr von Sauerstoff derart beschleunigt wird, daß sich der Zusatz von jeglichen, zersetzungsfördernden, chemischen Stoffen erübrigt.

Der Verzicht auf die vorzugsweise chemischen Zusätze, welche unter anderem den Geruch der entstehenden Gase während des Zersetzungsprozesses überdecken, hat allerdings den Nachteil einer erhöhten Geruchsbelästigung nach öffnen des Fäkalienbehälters, z.B. während der Nutzung, wobei die direkte Verbindung zwischen dem Toilettenbecken und dem Fäkalienbehälter ständig geöffnet ist.

Aus der **EP-A 0552411** ist eine Toilettenvorrichtung bekannt welche in einem Toilettenwagen befestigt ist und sich oberhalb eines entnehmbaren Fäkalienbehälters befindet. Die Toilettenvorrichtung weist an ihrem unteren Ende eine Verbindungsöffnung zu einem Fäkalienbehälter auf um einen Transport der Fäkalien bei der Benutzung zum Fäkalienbehälter zu ermöglichen. Um anschließend ein Leeren des Fäkalienbehälters zu erlauben ohne das der Inhalt während des Transports zur einer Entleerungsstation herausläuft ist ein Schieberventil vorgesehen, was vor der Herausnahme des Fäkalienbehälters geschlossen werden kann. Derartige Toilettenvorrichtungen haben den Nachteil, dass während des Gebrauchs die Verbindung vom Toilettenbecken zum Fäkalientank weit geöffnet sein muss. Während des Gebrauchszeitraums können dann die Gase beim teilgefüllten Fäkalientank in das Toilettenbecken und damit nach außen entweichen, was zu einer Geruchsbelästigung für den Benutzer führt. Um den Geruch zu überdecken müssen hierbei dem Fäkalientank geruchsüberdeckende Flüssigkeiten zugeführt werden, die üblicherweise anti-bakteriell wirkende Zusätze aufweisen und gleichzeitig als Spülflüssigkeit dienen.

Aus dem Stand der Technik **DE-A 2154652** ist ein weiteres sogenanntes Spülklosett bekannt mit einem annähernd senkrechten Auslaßrohr, daß an seinem oberen Ende mit einem schaltbaren Sperrorgan versehen und an seinem unteren Ende mit einem Fallrohr verbunden ist; einer Klosettschüssel, die über dem Sperrorgan am oberen Ende des Auslassrohrs endet, eine Spülvorrichtung aufweist und bei offenem Sperrorgan in das Auslassrohr und bei verschlossenem Sperrorgan in einen Tank entleerbar ist und eine vorzugsweise elektrisch betätigte Pumpe zur Förderung von Spülflüssigkeit aus dem Tank über die Spülvorrichtung in die Klosettschüssel aufweist. Die Aufgabe der dortigen Erfindung ist dabei die Schaffung eines Spülklosetts, daß den Vorteil aufweist bei jedem Spülvorgang nur eine kleine Flüssigkeitsmenge zu verlieren und trotzdem eine Verschmutzung des Spülflüssigkeitstanks zu vermeiden. Zusätzlich weist das erfindungsgemäße Spülklosett ein Gebläse auf, welches im Auslassrohr einen Unterdruck zu erzeugen vermag. Hierdurch wird z.B. der aufsteigende Geruch aus der angeschlossenen Kanalisation unterbunden bzw. nach außen abgesaugt.

Aus dem Stand der Technik **DE-OS 4311066** ist es des weiteren bekannt, einen elektromotorisch angetriebenen Absaugventilator zur Luftabsaugung, direkt aus dem Toilettenbecken, zur Anwendung zu bringen. Der Absaugventilator sitzt dabei in einer geschlossenen Absaugleitung, die mit dem Austrittsende an das vom Toilettenbecken abgehende Wasserrohr anschließbar ist. Das Eintrittsende der Absaugleitung dagegen ist direkt an die Wasserspülleitung des Toilettenbeckens angeschlossen.

Diese Lösung hat allerdings nur die Aufgabe, die Geruchsbelästigung innerhalb des Toilettenbeckens zu beheben.

Bei einer weiteren Absaugvorrichtung aus dem Stand der Technik **DE-OS 2547496** bzw. **DE-OS 3049962**, ist der Antriebsmotor mit Absaugventilator mit seinem Austrittsende an einen separaten Abluftkanal angeschlossen, welcher nach draußen führt. Derartige Absaugvorrichtungen benötigen besondere Abluftkanäle im Bereich des Toilettenbeckens und bauen somit sehr komplex bzw. benötigen oft einen entsprechend großen Bauraum.

Die Erfindung hat deshalb die Aufgabe, die bei Toilettenvorrichtungen mit herausnehmbaren Fäkalienbehältern entstehende Geruchsbelästigung während des Gebrauchs, bedingt durch die offene Verbindung zum Fäkalienbehälter zu vermeiden und den Zusatz umweltverschmutzender, Kläranlagen stark belastender Chemikalien zu erübrigen, sowie eine einfache Handhabung zu gewährleisten.

Die Aufgabe wird dadurch gelöst, daß die im Fäkalienbehälter entstandenen Gase automatisch mit dem Öffnen des Fäkalienbehälters zum Gebrauch mittels eines elektrisch angetriebenen Absaugventilators aus dem Fäkalienbehälter nach außen abgesaugt werden, wodurch gleichzeitig sauerstoffreiche Frischluft über die Einlassöffnung des Fäkalienbehälters zur Verbesserung der Zersetzung des Inhalts des Fäkalienbehälters eingesaugt wird und zusätzlich eine ständig geöffnete Verbindung des Fäkalientanks zur Außenluft besteht.

Der elektrisch betriebene Absaugventilator ist dabei an einer Serviceklappe und/oder an einer Fahrzeugwand bzw. Fahrzeugdach befestigt.

Diese Lösung wird erfindungsgemäß durch die Merkmale des **Schutzanspruchs 1** definiert, wobei die Unteransprüche vorteilhafte Ausgestaltungen definieren. Eine erste vorteilhafte Ausgestaltung weist einen Absaugventilator auf, welcher über eine Verbindungsleitung mit einem abnehmbaren Anschluss am Fäkalienbehälterausgang verbunden ist. Eine weitere vorteilhafte Ausgestaltung sieht vor, dass ein Fäkalienbehälterausgang als eine Öffnung im Fäkalienbehälter mit fest installiertem, den Fäkalienbehälterausgang im herausgezogenen Zustand verschließenden Schieber ausgebildet ist, der im eingeschobenen Zustand den Fäkalienbehälterausgang automatisch leitend mit einem fest installierten Kamin koppelt, was die Handhabung erheblich vereinfacht.

Eine Weiterentwicklung der Erfindung sieht vor, dass die Vorrichtung automatisch mit dem Öffnen des Fäkalienbehälters zum Gebrauch oder durch das Öffnen des Toilettendeckels zugeschaltet wird.

Weitere Einzelheiten und Vorteile der erfindungsgemäßen Vorrichtung ergeben sich aus den Unteransprüchen sowie aus der nachfolgenden Beschreibung.
**Fig. 1 :**
   zeigt die Draufsicht auf die Applikation der Erfindung an den Fäkalienbehälter.
**Fig. 2 :**
   zeigt die Anbringung des Absauglüfters an z. B. die außenliegende Serviceklappe eines Wohnmobils/-wagens oder Caravans und den eingeschobenen Fäkalienbehälter.
**Fig. 3 :**
   zeigt die Anbringung eines abnehmbaren Gummimufffensteckverschlußes als Verbindung von Entleerungsstutzen und Absaugschlauch.
**Fig. 4 :**
   zeigt die Anbringung eines integrierten Entlüftungsschiebers an einer zusätzlich angebrachten Öffnung des Fäkalienbehälters.
**Fig. 5 :**
   zeigt die Anbringung des Oberteils des Entlüftungsschiebers am Toilettenkörper mit festinstalliertem Kamin, Absaugrohr oder Schlauch.
**Fig. 6 :**
   zeigt die Anbringung eines Betriebsschalters am Toilettenkörper, der durch den Öffnungsriegel zur Toilettenbenutzung betätigt wird.

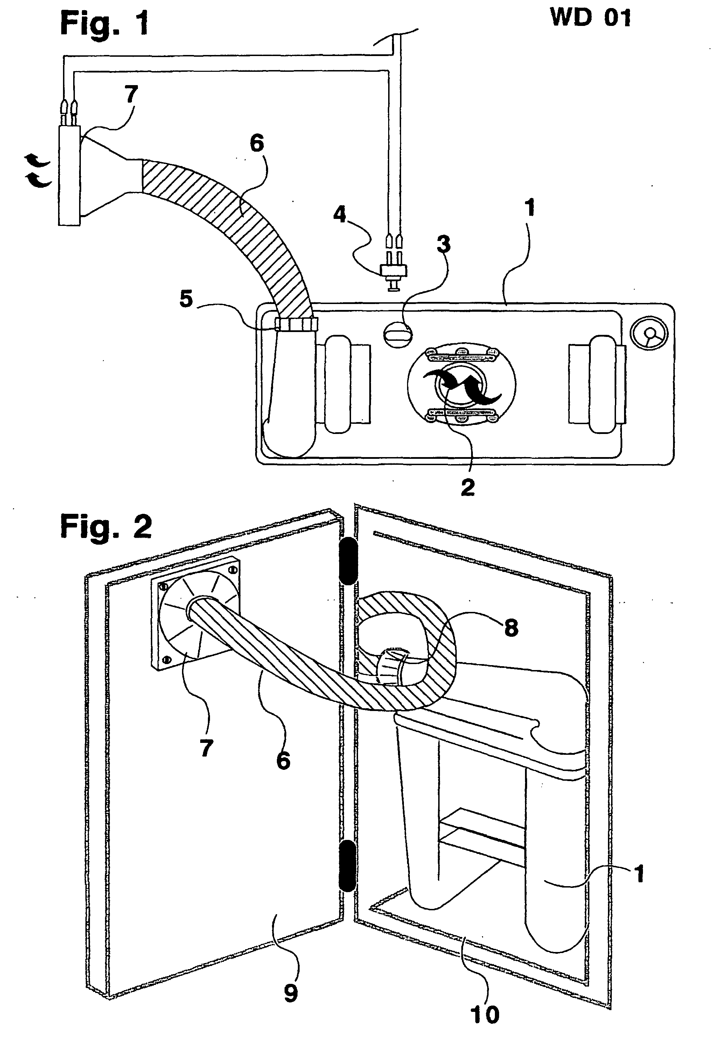

### Beschreibung zu Fig. 1 :

Beim Drehen der Schieberbetätigung **3** wird der Schieber **2** am Fäkalienbehälter **1** geöffnet, welcher die Verbindung des Toilettenbeckens zum Fäkalienbehälter herstellt oder unterbricht, wobei dadurch gleichzeitig der Kontaktschalter 4 den Absaugventilator **7** einschaltet. Der Absaugventilator **7** ist durch einen flexiblen Spiralschlauch **6** mit der Verschraubung des Entleerungsstutzens **5** verbunden und saugt über diesen die entstandenen Gase aus dem Fäkalienbehälter ins Freie ab. Durch die Absaugung der Gase wird gleichzeitig über die Öffnung des Schiebers **2** Frischluft in den Fäkalienbehälter gesaugt und somit der Gasaustritt in den Toilettenbeckenbereich verhindert.

### Beschreibung zu Fig. 2 :

**Fig. 2 :** zeigt den eingeschobenen Fäkalienbehälter **1** im, aus dem Stand der Technik bekannten Servicefach **10** z.B. eines Wohnmobils. Die Serviceklappe **9,** welche das Servicefach verschließt wurde mit einer entsprechenden Öffnung versehen, wodurch der an der Serviceklappe angeschraubte Absaugventilator **7** die Gase ins Freie abführen kann. Der Absaugventilator **7** kann auch an jeder beliebig anderen Stelle befestigt werden, da die Länge des Spiralschlauchs **6** für die Absaugwirkung unbedeutend ist.
Der Spiralschlauch **6** ist mit dem Absaugventilator **7** fest verbunden und an dem Entleerungsverschluß **8** mit einem Bajonettanschluß befestigt. Durch den Bajonettverschluß ist die Verbindung Absaugventilator **7** und Fäkalienbehälter **1** problemlos zu trennen um den Fäkalienbehälter **1** zu entnehmen und zu entleeren.

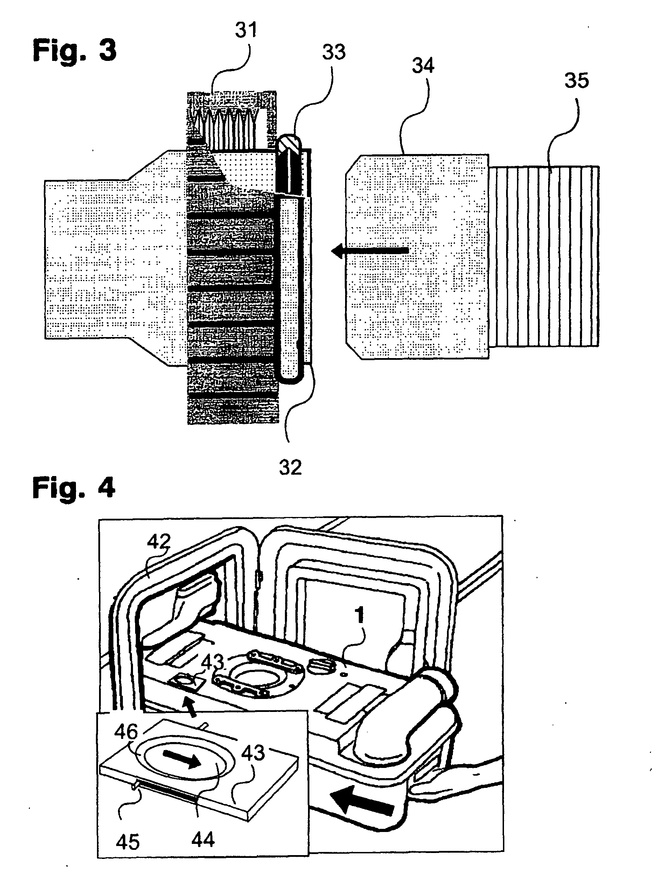

### Beschreibung zu Fig. 3 :

**Fig. 3** zeigt einen Gummimuffensteckverschluß bei dem die Muffe **32** fest mit dem Entleerungsschraubverschluß **31** des nicht gezeigten Fäkalienbehälters verbunden ist.
In der Muffe **32** ist ein doppellippiger Dichtring **33** vorhanden, der die Einschiebhülse **34,** verbunden mit dem Absaugschlauch **35** nach beiden Seiten abdichtet und die Hülse **34** gleichzeitig festklemmt.

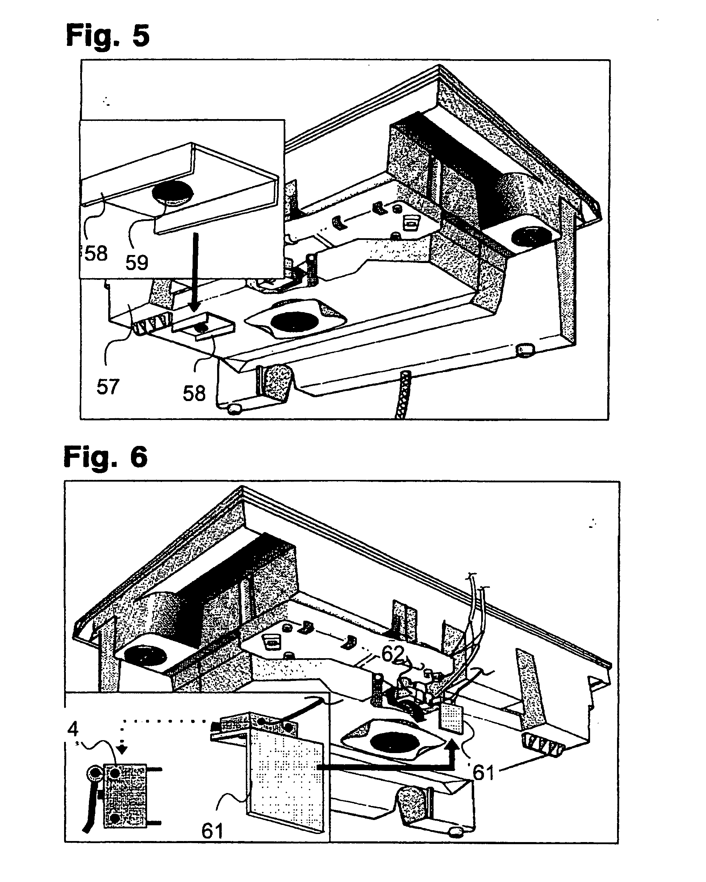

### Beschreibung zu Fig. 4 und Fig. 5 :

**Fig. 4** zeigt das integrierte Entlüftungsschiebergehäuse **43** an einer zusätzlichen Öffnung am Fäkalienbehälter **1.**
Beim Einschieben des Fäkalienbehälters **1** ins Servicefach **42** wird das Entlüfterschiebergehäuse **43** in das Führungsoberteil **58** in **Fig.5** eingeschoben. Hierbei wird der durch Federn geschlossene Schieber **43** in **Fig. 4** durch die an ihm befestigten Öffnungsstifte **45** aufgeschoben.
**Fig. 5** zeigt das Führungsoberteil **58** des Schiebergehäuses **43** in **Fig.4,** fest verbunden mit dem Toilettenkörper **57** in **Fig 5.** Am Führungsoberteil **58** befindet sich das Absaugrohr bzw. der Abzugsschlauch **59.** Ist das Entlüfterschiebergehäuse **43** in **Fig.4** in das Führungsoberteil **58** in **Fig.5** eingeschoben, schließen die am Schiebergehäuse **43** entstandene Öffnung und die Kaminöffnung **59** genau miteinander ab. Der in das Entlüftungsschiebergehäuse **43** in **Fig.4** eingearbeitete Dichtring **46** dichtet die entstandene Verbindung ab. In dem Entlüftungskamin **59** in **Fig.5** befindet sich ein elektrisch betriebener Absaugventilator, der entstandene Gase aus dem Fäkalienbehälter absaugt.

Eine weitere Möglichkeit wäre, den Schieber durch ein Ventil zu ersetzen.

### Beschreibung zu Fig. 6 :

**Fig. 6** beschreibt den Betriebsschalter **4** am Öffnungsriegel **62.**
Der Betriebsschalter **4** ist vorzugsweise auf einem Aluminiumwinkel **61** befestigt. Dieser wird in unmittelbarer Nähe des Öffnungsriegels **62** am Servicefach installiert, so dass das Kontaktteil des Betriebsschalters **4** am Öffnungsriegel **62** anliegt. Beim Verdrehen des Öffnungsriegels **62** wird der Betriebsschalter **4** betätigt und der Absaugventilator eingeschaltet.

## Patentansprüche

1. Fäkalienbehälter eines Wohnmobils/-wagens oder Caravans, wobei der Fäkalienbehälter (1) herausnehmbar ist, **dadurch gekennzeichnet, dass** der Fäkalienbehälter (1) eine Vorrichtung zur Be- und Entlüftung des Fäkalienbehälters, mit einer zusätzlichen ständig geöffneten Verbindung des Fäkalienbehälters zur Außenumgebung aufweist;
dass ein über eine Verbindungsleitung (6) angeschlossener, elektrisch betriebener Absaugventilator (7) automatisch mit der Öffnung eines Schiebers (2) am Fäkalienbehälter (1) durch einen Betriebsschalter (4) in Funktion gesetzt wird, und dass der Absaugventilator (7) an einem Durchbruch an einer Serviceklappe (9) und/oder an einer Fahrzeugwand bzw. Fahrzeugdach befestigt wird.

2. Fäkalienbehälter nach Anspruch 1,
**dadurch gekennzeichnet, dass** der Absaugventilator (7) über die Verbindungsleitung (6) mit einem abnehmbaren Anschluss (5) am Fäkalienbehälterausgang verbunden ist.

3. Fäkalienbehälter nach Anspruch 1,
**dadurch gekennzeichnet, dass** ein Fälcalienbehälterausgang (44) als eine Öffnung im Fäkalienbehälter (1) mit fest installiertem, den Fäkalienbehälterausgang (44) im herausgezogenen Zustand verschließenden Schieber ausgebildet ist, der im eingeschobenen Zustand den Fäkalienbehälterausgang (44) automatisch leitend mit einem fest installierten Kamin koppelt.

## Claims

1. A faeces container for a mobile home or caravan, the faeces container (1) being removable, **characterized in that** the faeces container (1) includes a device for venting said faeces container, with an additional, constantly open communication of the faeces container with the outside environment;
**in that** an electrically operated extractor fan (7), connected by way of a connecting pipe (6), is automatically set in operation by an operating switch (4) when a slide (2) on the faeces container (1) is opened, and
**in that** the extractor fan (7) is fixed to an opening provided in a service door (9) and/or in a vehicle wall or vehicle roof.

2. A faeces container according to Claim 1,
**characterized in that** the extractor fan (7) is attached by way of the connecting pipe (6) to a detachable connection (5) on the outlet of the faeces container.

3. A faeces container according to Claim 1,
**characterized in that** an outlet (44) of the faeces container is in the form of an opening in the faeces container (1) having a permanently installed slide which closes the outlet (44) of the faeces container when it has been pulled out and, when it has been pushed in, automatically couples the outlet (44) of the faeces container with a permanently installed chimney.

## Revendications

1. Récipient à matières fécales d'une auto-caravane ou d'une caravane, le récipient à matières fécales (1) pouvant être retiré,
**caractérisé en ce que**
le récipient à matières fécales (1) présente un dispositif destiné à aérer et à ventiler par aspiration le récipient à matières fécales comportant une liaison supplémentaire constamment ouverte du récipient à matières fécales vers l'environnement extérieur,
un ventilateur d'aspiration (7) actionné à l'électricité et raccordé au moyen d'une conduite de liaison (6) est automatiquement mis en marche par un commutateur de service (4) lorsqu'une vanne d'arrêt (2) située sur le récipient à matières fécales (1) s'ouvre et
le ventilateur d'aspiration (7) est fixé à un passage situé sur un volet de service (9) et/ou sur une paroi du véhicule ou un toit du véhicule.

2. Récipient à matières fécales selon la revendication 1,
**caractérisé en ce que**
le ventilateur d'aspiration (7) est relié à un raccordement (5) amovible situé à la sortie du récipient à matières fécales par l'intermédiaire de la conduite de liaison (6).

3. Récipient à matières fécales selon la revendication 1,
**caractérisé en ce qu'**
une sortie de récipient à matières fécales (44) prend la forme d'une ouverture dans le récipient à matières fécales (1) comportant une vanne d'arrêt installée à demeure qui à l'état retiré ferme la sortie du récipient à matières fécales et qui à l'état inséré couple la sortie de récipient à matières fécales (44) en conduction automatique à une cheminée installée à demeure.
